# FASCICULE DE BREVET EUROPEEN

(11) **EP 3 154 284 B1**
(45) Date de publication et mention de la délivrance du brevet: **01.12.2021**
(21) Numéro de dépôt: 16192252.1
(22) Date de dépôt: 04.10.2016
(51) Int. Cl.: H04W 12/02, G06Q 20/32, G06Q 20/34, H04W 4/80, H04W 76/11, H04W 12/50

(54) **PROCÉDÉ D'APPAIRAGE DANS UN DISPOSITIF PÉRIPHÉRIQUE ET DANS UN TERMINAL DE COMMUNICATION, DISPOSITIFS ET PROGRAMME CORRESPONDANTS**
KOPPLUNGSVERFAHREN IN EINEM PERIPHERIEGERÄT UND EINEM KOMMUNIKATIONSENDGERÄT, ENTSPRECHENDE VORRICHTUNGEN UND PROGRAMME
PAIRING METHOD IN A PERIPHERAL DEVICE AND IN A COMMUNICATION TERMINAL, CORRESPONDING DEVICES AND PROGRAM

(30) Priorité: 05.10.2015 FR 1559477
(43) Date de publication de la demande: 12.04.2017
(73) Titulaire: Ingenico Inc., Alpharetta, GA 30005 (US)
(72) Inventeur: ROTSAERT, Christopher, 59290 Wasquehal (FR)
(74) Mandataire: Vidon Brevets & Stratégie

(56) Documents cités:
- FR-A1- 3 013 873
- US-A1- 2003 050 009
- US-A1- 2006 143 455
- US-A1- 2014 256 260
- None

## Description

### 1. Domaine

L'invention se rapporte au domaine de l'appairage de dispositifs de communication sans fil et porte plus particulièrement sur un tel appairage entre un terminal de communication et un dispositif périphérique.

### 2. Arrière-plan

Les solutions d'encaissement mobile, ou mPOS (pour « *Mobile Point of Sale* »), ont connu une croissance très rapide ces dernières années. Ces solutions de paiement associent, généralement par la technologie Bluetooth, un lecteur de carte bancaire compact à un terminal de communication de type Smartphone ou tablette par exemple.

De la même manière que pour les solutions de paiement classiques par carte, les solutions mPOS sont confrontées à des risques de sécurité qu'il convient de prendre en compte. Les données de carte bancaire (numéro de carte, date de fin de validité, cryptogramme à trois chiffres...) ou encore le code PIN du porteur de la carte sont autant de données sensibles que des fraudeurs cherchent à récupérer en attaquant les systèmes d'information des acteurs qui traitent et stockent ces données.

Le conseil PCI SSC (« *PCI Security Standards Council* ») est l'instance qui émet des recommandations de sécurité sur les paiements par carte et définit à cette fin des standards PCI (« *Payment Card Industry* ») que doivent respecter les acteurs concernés, en particulier les établissements bancaires et marchands. Le conseil PCI SSC a notamment crée la norme de sécurité pour les terminaux de paiement, à savoir la norme PCI PTS (pour « *Payment Card Industry PIN Transaction Security* »). PCI PTS est la norme de sécurité actuellement en vigueur au plan international pour les terminaux de paiement.

Les dispositifs mPOS requérant la saisie du code PIN du porteur de la carte doivent donc respecter un certain nombre d'exigences définies par la norme PCI PTS afin d'obtenir la certification du conseil PCI SSC. Ces exigences portent plus particulièrement sur la sécurité physique et fonctionnelle des terminaux de paiement avec saisie de code PIN. La norme PCI PTS interdit depuis janvier 2015 par exemple l'usage, dans les dispositifs mPOS, du standard Bluetooth LE (pour « *Low Energy* »), dit BLE, pour une version inférieure à 4.2. Cette interdiction résulte d'une faille de sécurité qui a été détectée au niveau du processus d'appairage des dispositifs Bluetooth employant une technologie BLE inférieure à la version 4.2. Aussi, pour obtenir la certification de l'instance PCI SCC, tous les nouveaux modèles de terminaux de paiement supportant la technologie BLE doivent à ce jour utiliser la version 4.2.

Dans le cadre d'un système de paiement mPOS, il est donc nécessaire que le terminal de communication, typiquement un Smartphone, supporte la version 4.2 du standard BLE. Or, cette technologie est encore peu déployée et le passage au BLE 4.2 sur un Smartphone ou équivalent n'est possible que si le client en prend lui-même la décision.

Ainsi, il existe aujourd'hui un besoin pour une solution efficace et fiable permettant de mettre en œuvre un système de paiement mPOS répondant aux exigences définies par la norme PCI PTS. En particulier, aucune solution conforme à la norme PCI PTS ne permet aujourd'hui de réaliser en toute sécurité l'appairage, dans un système mPOS, entre un dispositif périphérique (doté d'un lecteur de carte par exemple) et un terminal de communication, de type Smartphone ou tablette par exemple.

Les documents US2014/0256260, FR2013873, US2006/0143455 et US2003/0050009 représentent l'état de la technique pertinent.

### 3. Résumé

L'invention est définie par les revendications indépendantes 1, 7 et 11-13.

L'invention vise plus particulièrement l'établissement d'un appairage sécurisé entre un dispositif périphérique et un terminal de communication formant ensemble un terminal de paiement, dans laquelle il n'est pas nécessaire que le dispositif périphérique comprenne un écran d'affichage ou, plus généralement, une interface utilisateur (écran, clavier, interface de saisie...).

De nouvelles solutions sont nécessaires pour permettre l'appairage, conforme au standard PCI PTS, d'un dispositif périphérique avec un terminal de communication dans un système mPOS.

Par ailleurs, afin de limiter notamment l'encombrement et la complexité d'un dispositif périphérique coopérant avec un terminal de communication dans un système mPOS, il est proposé de mettre en œuvre un tel dispositif périphérique dépourvu de toute interface utilisateur (écran, clavier...). Réaliser un appairage conforme au standard PCI PTS entre un terminal de communication et un dispositif périphérique, sans l'usage d'une interface utilisateur au niveau dudit dispositif périphérique, pose cependant une réelle difficulté.

La présente invention propose donc une solution permettant de réaliser un appairage sécurisé conforme à la norme PCI PTS entre un terminal de communication et un dispositif périphérique, tout en s'affranchissant de l'usage d'une quelconque interface utilisateur au niveau du dispositif périphérique.

A cet effet, l'invention propose un dispositif périphérique selon la revendication indépendante 1.

L'invention permet ainsi d'appairer de façon sécurisée les moyens de communication sans fil d'un terminal de communication, d'une part, et d'un dispositif périphérique, d'autre part. Cet appairage est réalisé sans que l'usage d'une quelconque interface utilisateur ne soit nécessaire, voire même présente, au niveau du dispositif périphérique. L'invention permet en particulier de réaliser un tel appairage, de type Bluetooth par exemple, en conformité avec la norme PCI PTS, quand bien même la version du protocole Bluetooth installée serait inférieure à 4.2.

Selon un mode de réalisation particulier, le terminal de communication comprend un module de traitement, le module de transmission étant configuré pour déclencher la configuration, par le module de traitement du terminal de communication, dudit appairage à partir du code d'appairage reçu.

Selon un mode de réalisation particulier, l'appairage entre lesdits premier et deuxième modules de communication sans fil est de type Bluetooth, Wifi ou Wibree.

Selon un mode de réalisation particulier, le dispositif périphérique est configuré pour agir en tant que dispositif maître dans ledit appairage.

Selon un mode de réalisation particulier, l'identifiant comprend l'adresse réseau (l'adresse MAC par exemple) du terminal de communication.

Selon un mode de réalisation particulier, le module de génération est configuré pour générer aléatoirement le code d'appairage.

Selon un mode de réalisation particulier, le dispositif périphérique est un dispositif périphérique de paiement comprenant un lecteur de carte destiné à coopérer avec une carte pour mettre en œuvre une transaction de paiement.

La présente invention propose également un terminal de communication selon la revendication indépendante 7.

Les avantages décrits ci-avant en relation avec le dispositif périphérique s'appliquent par analogie au terminal de communication.

Selon un mode de réalisation particulier, le module de traitement est configuré pour comparer le code d'appairage avec un code de référence et pour activer ledit appairage seulement si le code d'appairage et le code de référence coïncident l'un avec l'autre.

Selon un mode de réalisation particulier, le module de traitement est configuré pour configurer automatiquement ledit appairage à partir du code d'appairage sans intervention humaine via une quelconque interface utilisateur au niveau dudit terminal de communication.

Selon un mode de réalisation particulier, le terminal de communication comprend une interface utilisateur, le module de traitement étant configuré pour causer la présentation, par l'interface utilisateur, du code d'appairage à un utilisateur afin de permettre la configuration dudit appairage.

L'utilisation de l'interface utilisateur de façon déportée au niveau du terminal de communication permet d'assurer une bonne compacité et une complexité limitée du dispositif périphérique, tout en garantissant un appairage sécurisé des moyens de communication sans fil en question.

Selon un mode de réalisation particulier, l'interface utilisateur est configurée pour afficher le code d'appairage.

L'invention concerne également un système comprenant :
- un dispositif périphérique tel que défini ci-avant ; et
- un terminal de communication tel que défini ci-avant.

L'invention propose en outre un procédé d'appairage mis en œuvre par un dispositif périphérique selon la revendication indépendante 11.

L'invention propose aussi un procédé d'appairage mis en œuvre dans un terminal de communication selon la revendication indépendante 12.

À noter que les différents modes de réalisation définis ci-avant en relation avec le dispositif périphérique, d'une part, et avec le terminal de communication, d'autre part, ainsi que les avantages associés à ces procédés, s'appliquent par analogie aux procédés d'appairage définis ci-avant.

Dans un mode particulier de réalisation, les différentes étapes du procédé d'appairage mis en œuvre par le dispositif périphérique sont déterminées par des instructions de programmes d'ordinateurs.

De même, selon un mode de réalisation particulier, les différentes étapes du procédé d'appairage mis en œuvre par le terminal de communication sont déterminées par des instructions de programmes d'ordinateurs.

En conséquence, l'invention vise aussi selon la revendication indépendante 13 un programme d'ordinateur sur un support d'informations (ou support d'enregistrement), ce programme étant susceptible d'être mis en œuvre dans un dispositif périphérique et/ou dans un terminal de communication, ou plus généralement dans un ordinateur, ce programme comportant des instructions adaptées à la mise en œuvre des étapes de l'un des procédés d'appairage tels que définis ci-avant.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un mode de réalisation, l'invention est mise en œuvre en utilisant des composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc. Chaque composante du système précédemment décrit met bien entendu en œuvre ses propres modules logiciels.

À noter par ailleurs que les différents modes de réalisation mentionnés ci-dessus sont combinables entre eux pour la mise en œuvre de la présente technique.

### 4. Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 présente schématiquement la structure d'un dispositif périphérique et d'un terminal de communication, selon un mode de réalisation particulier ;
- les figures 2 et 3 représentent schématiquement des modules mis en œuvre dans respectivement le dispositif périphérique et le terminal de communication représentés en figure 1 ;
- la figure 4 représente, sous forme d'un organigramme, les étapes d'un procédé d'appairage mise en œuvre par le dispositif périphérique et le terminal de communication représentés en figure 1, selon un mode de réalisation particulier ;
- la figure 5 représente, sous forme d'un organigramme, les étapes d'un procédé d'appairage mise en œuvre par le dispositif périphérique et le terminal de communication représentés en figure 1, selon un mode de réalisation particulier.

### 5. Description

Comme indiqué précédemment, la technique proposée se rapporte à l'appairage de dispositifs de communication sans fil et porte plus particulièrement sur une solution permettant de réaliser un appairage sécurisé, conforme à la norme PCI PTS, entre un terminal de communication et un dispositif périphérique, en s'affranchissant de l'usage de toute interface utilisateur au niveau du dispositif périphérique.

On entend, dans ce document, par « interface utilisateur» tous moyens permettant à un utilisateur d'interagir avec un dispositif électronique tel qu'un terminal de communication par exemple. Une interface utilisateur peut comprendre par exemple un écran d'affichage (ou tout autre moyen d'affichage) et/ou à un clavier (ou tout type de bouton, actionneur etc.).

L'invention propose d'optimiser le processus d'appairage entre les moyens de communication sans fil d'un dispositif périphérique et ceux d'un terminal de communication en utilisant notamment des connecteurs complémentaires présents sur le terminal de communication et sur le dispositif périphérique.

L'invention propose, selon un exemple de réalisation, d'utiliser une interface utilisateur présente sur le terminal de communication pour réaliser ledit appairage. Utiliser l'interface utilisateur de façon déportée au niveau du terminal de communication permet avantageusement de réaliser un appairage sécurisé tout en s'affranchissant de l'usage de toute interface utilisateur au niveau du dispositif périphérique lui-même. D'autres modes de réalisation ne faisant pas appel à une interface utilisateur au niveau du terminal de communication sont toutefois envisageables dans le cadre de la présente technique.

L'invention, selon ses différents modes de réalisation, met ainsi en œuvre un connecteur sur le dispositif périphérique et un connecteur complémentaire sur le terminal de communication. En couplant ensemble ces connecteurs, on peut établir une communication filaire entre le dispositif périphérique et le terminal de communication. Le dispositif périphérique est apte, via cette communication filaire, à transmettre un code d'appairage que le terminal de communication peut utiliser avantageusement pour configurer ou réaliser l'appairage entre ses propres moyens de communication sans fil et ceux du dispositif périphérique. Une interface utilisateur du terminal de communication peut, le cas échéant, être utilisée de manière avantageuse pour permettre à un utilisateur d'intervenir dans le processus d'appairage entre les moyens de communication sans fil du dispositif périphérique et ceux du terminal de communication.

L'usage des connecteurs et, le cas échéant de l'interface utilisateur du terminal de communication, permet avantageusement d'établir de façon sécurisée une connexion sans fil entre le dispositif périphérique et le terminal de communication. De façon avantageuse, l'appairage est réalisé conformément au standard PCI PTS sans qu'une interface utilisateur soit nécessaire au niveau du dispositif périphérique.

Dans un mode de réalisation particulier, le dispositif périphérique ne comprend pas d'écran d'affichage. Dans un mode de réalisation particulier, le dispositif périphérique ne comprend aucune interface utilisateur.

D'autres aspects et avantages de la présente invention ressortiront des exemples de réalisation décrits ci-dessous en référence aux dessins mentionnés ci-avant.

Sauf indications contraires, les éléments communs ou analogues à plusieurs figures portent les mêmes signes de références et présentent des caractéristiques identiques ou analogues, de sorte que ces éléments communs ne sont généralement pas à nouveau décrits par souci de simplicité.

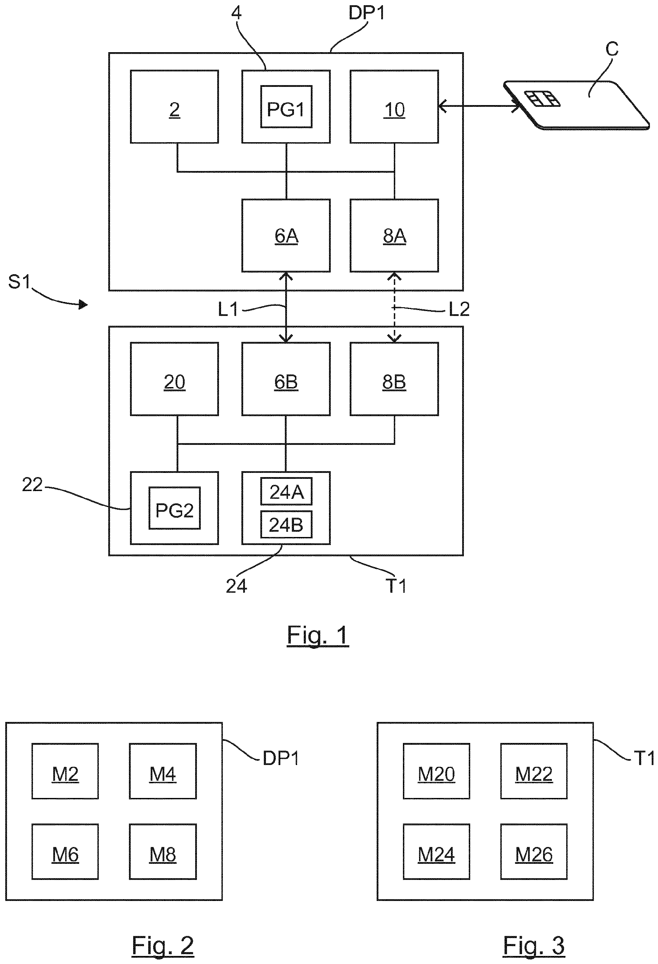

La **figure 1** représente, de manière schématique, la structure d'un dispositif périphérique (appelé par la suite « périphérique ») DP1 et d'un terminal de communication T1 (appelé par la suite « terminal »), conforme à un mode de réalisation particulier. Le périphérique DP1 et le terminal T1 sont aptes à coopérer ensemble pour former un système S1.

Dans un mode de réalisation particulier, le système S1 est un terminal de paiement électronique, par exemple un terminal de paiement par carte (par exemple de type mPOS).

On comprendra que certains éléments généralement présents dans un terminal de communication, et dans un périphérique destiné à coopérer avec un tel terminal, ont été volontairement omis car ils ne sont pas nécessaires à la compréhension de la présente invention.

Le périphérique DP1 est destiné à être couplé de manière amovible au terminal T1. Ce périphérique prend par exemple la forme d'un boîtier de sécurité ou clé de sécurité (ou « *dongle* ») configuré pour être couplé de façon amovible au terminal T1.

Plus précisément, le périphérique DP1 comprend dans cet exemple un processeur 2 (ou plus généralement un contrôleur), une mémoire non volatile 4, un connecteur 6A, une interface de communication sans fil 8A et un lecteur de carte 10.

La mémoire 4 est une mémoire non volatile réinscriptible ou une mémoire morte (ROM), cette mémoire constituant un support d'enregistrement conforme à un mode de réalisation particulier, lisible par le dispositif périphérique DP1, et sur lequel est enregistré un programme d'ordinateur PG1 conforme à un mode de réalisation particulier. Ce programme d'ordinateur PG1 comporte des instructions pour l'exécution des étapes d'un procédé d'appairage selon un mode de réalisation particulier.

Le connecteur 6A est apte à être couplé de façon amovible à un connecteur complémentaire 6B présent sur le terminal T1. L'accouplement des connecteurs 6A et 6B permet d'établir une liaison de communication filaire L1 entre le périphérique DP1 et le terminal T1.

Selon un mode de réalisation particulier, les connecteurs 6A et 6B sont des connecteurs audio, de type « jack » par exemple. D'autres variantes sont envisageables sans départir du cadre (connecteurs USB, microUSB etc.).

Il est à noter que le connecteur 6A et le connecteur 6B peuvent, en réalité, chacun comprendre une pluralité de connecteurs. Le nombre et l'emplacement des connecteurs 6A et 6B peuvent être adaptés selon le cas.

L'interface de communication sans fil 8A est apte à être appairée avec une interface de communication sans fil correspondante (notée 8B) présente sur le terminal T1. La réalisation de cet appairage permet d'établir une liaison de communication sans fil L2 entre les interfaces de communication sans fil 8A et 8B.

Selon un mode de réalisation particulier, la liaison de communication sans fil L2 est de type Bluetooth, par exemple Bluetooth 3.0. Le standard Bluetooth 3.0 constitue en particulier une alternative avantageuse vis-à-vis du BLE 4.2 dans la mesure où le Bluetooth 3.0 est actuellement d'avantage déployé les terminaux clients, du type Smartphone, tablette et ordinateur personnel par exemple.

D'autres types de communication sans fil sont toutefois envisageables, tels qu'une communication sans fil de type Wifi par exemple.

Le périphérique DP1 et le terminal T1 sont aptes à coopérer ensemble via la liaison de communication sans fil L2, une fois cette dernière établie, afin de réaliser une fonction donnée, comme par exemple réaliser une transaction avec une carte à puce. Pour ce faire, le périphérique DP1 comprend dans cet exemple un lecteur de carte 10 apte à coopérer par contact avec une carte à puce C. Dans cet exemple particulier, la carte à puce C est une carte de paiement.

Le processeur 2 piloté par le programme d'ordinateur PG1, met ici en œuvre un certain nombre de modules représentés en **figure 2**, à savoir : un module de communication sans fil M2 apte à communiquer via la liaison sans fil L2 avec le terminal T1 en utilisant l'interface de communication sans fil 6A, un module de réception M4 pour recevoir via la liaison de communication filaire L1 un identifiant du terminal T1, un module de génération M6 pour générer un code d'appairage, et un module de transmission M8 pour transmettre au terminal T1 ledit code d'appairage via la liaison de communication filaire L1.

Selon un mode de réalisation particulier, le périphérique DP1 est dépourvu d'écran. Alternativement, le périphérique DP1 est dépourvu d'écran et de clavier. Le périphérique DP1 peut ainsi être particulièrement compact et de complexité limitée. Dans le cas par exemple où le périphérique DP1 se présente sous la forme d'un boîtier de sécurité amovible (ou « dongle »), il est avantageux de ne pas y intégrer d'écran ni de bouton, clavier etc. afin de limiter le coût, la complexité et la taille du périphérique DP1.

Selon un mode de réalisation particulier, le périphérique DP1 est dépourvu d'une quelconque interface utilisateur.

Par ailleurs, le terminal de communication T1 peut être un Smartphone, une tablette ou tout autre terminal de communication approprié. Ce terminal comprend dans cet exemple un processeur 20 (ou plus généralement un contrôleur), le connecteur 6B et l'interface de communication sans fil 8B déjà mentionnés précédemment, une mémoire non volatile 20, et une interface utilisateur 24.

Comme déjà indiqué, le connecteur 6B est apte à être couplé de façon amovible avec le connecteur complémentaire 6A de façon à établir une connexion filaire L1 entre le périphérique DP1 et le terminal T1. L'interface de communication sans fil 8B est en outre apte à être appairée avec l'interface de communication sans fil complémentaire 8A de façon à établir une connexion sans fil L2 entre le périphérique DP1 et le terminal T1.

La mémoire 22 est une mémoire non volatile réinscriptible ou une mémoire morte (ROM), cette mémoire constituant un support d'enregistrement conforme à un mode de réalisation particulier, lisible par le dispositif périphérique DP1, et sur lequel est enregistré un programme d'ordinateur PG2 conforme à un mode de réalisation particulier. Ce programme d'ordinateur PG2 comporte des instructions pour l'exécution des étapes d'un procédé d'appairage selon un mode de réalisation particulier.

L'interface utilisateur 24 comprend, dans cet exemple, un écran d'affichage 24A et un clavier 24B comportant au moins une touche (de type quelconque) qu'un utilisateur peut actionner pour interagir avec le terminal T1. Comme expliqué par la suite, dans cet exemple particulier, la présence d'une telle interface utilisateur au niveau du terminal T1 n'est pas nécessairement requise pour mettre en œuvre l'invention.

Le processeur 20 piloté par le programme d'ordinateur PG2, met en œuvre un certain nombre de modules représentés en **figure 3**, à savoir : un module de communication sans fil M20 apte à communiquer via la liaison sans fil L2 avec le module de communication sans fil M2 du périphérique DP1 en utilisant l'interface de communication sans fil 6B, un module de transmission M22 pour transmettre via la liaison de communication filaire L1 un identifiant du terminal T1, un module de réception M24 pour recevoir un code d'appairage du périphérique DP1, et un module de traitement pour configurer, à partir du code d'appairage reçu, l'appairage entre les modules de communication sans fil M2 et M20.

Dans un mode de réalisation particulier, les modules M20, M22, M24 et M26 sont contrôlés à l'aide d'une application spécifique mis en œuvre dans le terminal T1.

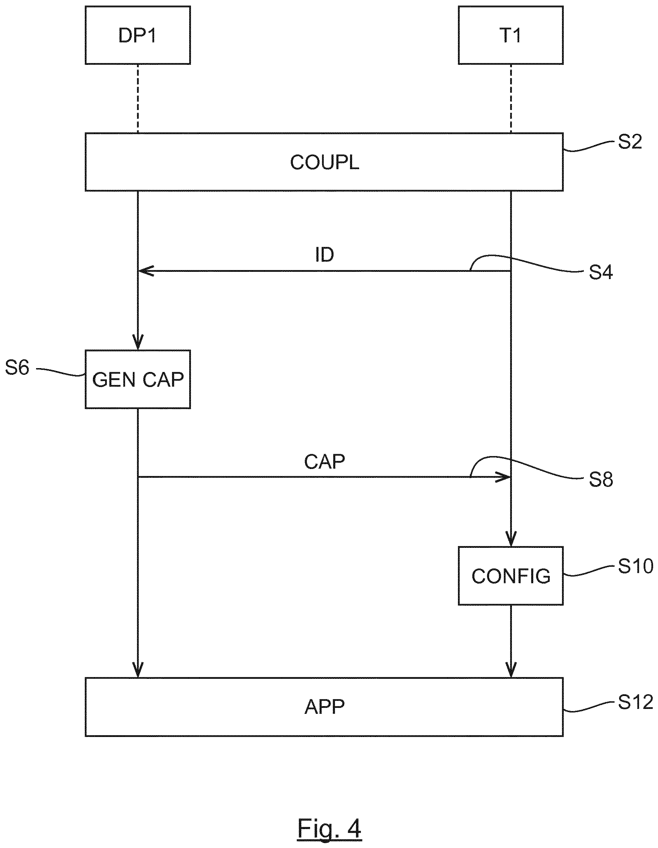

Les principales étapes réalisées par le périphérique DP1 d'une part et par le terminal T1 d'autre part, lors d'un procédé d'appairage, sont illustrées en **figure 4** et comprennent plus particulièrement :
- le couplage (S2) des connecteurs 8A et 8B de façon à établir la liaison de communication filaire L1 ;
- le terminal T1 envoie (S4) au périphérique DP1, via la liaison filaire L1, un identifiant ID du terminal T1 ;
- en réponse audit identifiant ID reçu, le périphérique DP1 génère (S6) un code d'appairage CAP, puis envoie (S8) ledit code d'appairage CAP au terminal T1 afin de permettre l'appairage entre les modules de communication sans fil M2 et M20 ; et
- configuration (S10), par le terminal T1, de l'appairage entre les modules de communication sans fil M2, M20 à partir du code d'appairage CAP reçu, de sorte à ce que lesdits modules de communication sans fil puissent communiquer ensemble via la liaison sans fil L2.

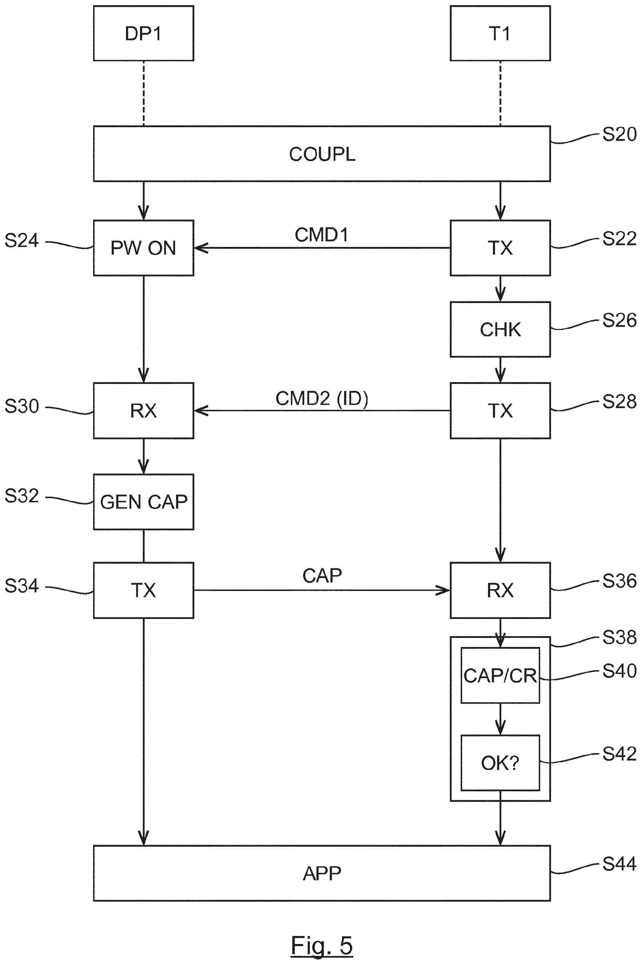

Un mode de réalisation particulier est à présent décrit en référence à la **figure 5****.** Plus précisément, le périphérique DP1 et le terminal T1 mettent chacun en œuvre un procédé d'appairage en exécutant respectivement le programme d'ordinateur PG1, PG2.

On supposera dans ce mode de réalisation que l'appairage entre les modules de communication sans fil M2, M20 est de type Bluetooth.

Au cours d'une étape d'accouplement S20, les connecteurs 6A et 6B sont couplés (de façon amovible) l'un à l'autre de sorte à établir une liaison de communication filaire L1, comme décrit précédemment en référence à l'étape S2.

Sur détection de cet accouplement S20, le module de transmission M22 du terminal T1 transmet (S22), via la liaison filaire L1, une commande CMD1 au périphérique DP1. Cette commande CMD1 cause le démarrage du périphérique DP1 (supposé éteint ou en veille jusque là). A noter que d'autres manières de mettre en marche le périphérique DP1 peuvent être envisagées. Selon une variante, la commande de démarrage CMD1 est transmise par le module de transmission M22 sur commande d'un utilisateur à l'aide de l'interface utilisateur 24. Dans un exemple particulier, une pression appropriée sur une touche spécifique du clavier 24B du terminal T1 permet d'initier le démarrage du périphérique DP1 (ceci pouvant si besoin être réalisé avant l'accouplement S20).

Le terminal T1 vérifie (S26) ensuite que la fonction Bluetooth est activée (et active cette fonction si besoin).

Au cours d'une étape de transmission S28, le module de transmission M22 transmet (S28), via la liaison filaire L1, un identifiant ID du terminal T1 au périphérique DP1. Cet identifiant ID est par exemple une adresse réseau du terminal T1. Dans un exemple particulier, l'identifiant ID est l'adresse MAC (ici MAC Bluetooth) du terminal T1.

Dans l'exemple considéré ici, l'identifiant ID est envoyé dans une commande CMD2 d'appairage, cette commande demandant au périphérique DP1 de lancer le processus d'appairage entre les modules de communication sans fil M2 et M20.

Le module de réception M4 reçoit, dans l'étape de réception S30, l'identifiant ID du terminal T1.

En réponse à cet identifiant ID, le périphérique DP1 débute le processus d'appairage Bluetooth entre les moyens de communication sans fil M2 et M20 (et plus particulièrement entre les interfaces 8A et 8B).

Plus spécifiquement, le module de génération M6 génère, en réponse à l'identifiant ID reçu, un code d'appairage CAP destiné à permettre ledit appairage. Dans cet exemple particulier, le périphérique DP1 génère le code d'appairage CAP en tant que dispositif maître conformément au standard Bluetooth. Le code d'appairage CAP est par exemple un code de type SSP (pour « *Secure Sample Pairing* ») « Passkey entry » ou SSP « *Numeric comparison* », conformément au standard Bluetooth.

Diverses manières de générer le code d'appairage CAP peuvent être envisagées dans le cadre de la présente technique. Dans un exemple particulier, le module de génération M6 génère le code d'appairage CAP de façon aléatoire. Il s'agit par exemple d'un code à 6 caractères ou plus, conformément au standard PCI PTS.

Le module de transmission M8 transmet, lors de l'étape de transmission S34 le code d'appairage CAP, via la liaison filaire L1, au terminal T1.

Une fois le code d'appairage CAP reçu (S36) par le module de réception M24, le terminal T1 procède à l'étape de configuration S38 au cours de laquelle il réalise l'appairage entre les modules de communication sans fil M2, M20.

Pour ce faire, le module de traitement M26 du terminal T1 configure (S38), ou active, à partir du code d'appairage CAP reçu, l'appairage entre les modules de communication sans fil M2, M20 du dispositif périphérique DP1 et du terminal T1 respectivement. La configuration S38 par le module de traitement M26 peut causer automatiquement l'activation de l'appairage en question. Alternativement, au moins une intervention humaine est en outre nécessaire au niveau du terminal T1 pour déclencher l'appairage entre les modules de communication sans fil M2, M20.

Plus particulièrement, dans le mode de réalisation considéré ici, le module de traitement M26 détermine (S40) un code de référence CR et compare (S40) le code d'appairage CAP reçu avec ledit code de référence CR. La manière dont ce code de référence est obtenu, et éventuellement préalablement stocké, par le terminal T1 peut varier selon le cas d'espèce et sera adaptée par l'homme du métier en fonction du contexte d'utilisation. Le module de traitement M26 est alors configuré pour réaliser l'appairage (S44), ici de type Bluetooth, entre les modules de communication sans fil M2, M20 seulement si le code d'appairage CAP et le code de référence CR coïncident l'un avec l'autre.

Selon un exemple particulier, la liaison de communication sans fil L2 qui résulte de l'appairage est de type Bluetooth en version 2.1 ou ultérieure, Wifi (avec utilisation d'un code de sécurité WPA), en conformité avec le standard PCI PTS.

Par ailleurs, dans l'exemple considéré ici, le module de traitement M26 configure (S38) automatiquement l'appairage entre les modules de communication sans fil M2, M20 à partir du code d'appairage CAP reçu, sans intervention humaine via une quelconque interface utilisateur au niveau du terminal T1. Aussi, la présence d'une telle interface utilisateur 24 au niveau du terminal T1 n'est pas nécessaire pour mettre en œuvre ce mode de réalisation particulier de l'invention. De façon avantageuse, l'appairage est alors réalisé de façon transparente pour l'utilisateur. Le système d'exploitation du terminal T1 doit toutefois être adapté pour autoriser une telle mise en œuvre de l'invention.

Selon une variante de réalisation, lors de la configuration S38, le module de traitement M26 fait intervenir l'utilisateur dans la configuration du processus d'appairage. On comprendra que le degré d'automatisation ou d'intervention de l'utilisateur dans le processus d'appairage peut être adapté au contexte d'utilisation.

Ainsi, le module de traitement M26 peut être configuré pour causer la présentation, à l'aide de l'interface utilisateur 24 du terminal T1, du code d'appairage CAP afin de permettre la validation dudit appairage par l'utilisateur. Cette présentation prend, par exemple, la forme d'un affichage du code d'appairage CAP sur l'écran 24A. L'utilisateur déclenche l'appairage entre les modules de communication sans fil M2, M20 à l'aide de ce code d'appairage CAP, en utilisant l'écran 24A et le clavier 24B.

Selon un premier exemple, le module de traitement M26 cause l'affichage automatique sur l'écran 24A du code d'appairage CAP reçu et du code de référence CR. Il revient alors à l'utilisateur de comparer ces deux codes et de valider, via l'interface utilisateur 24, l'appairage uniquement si les codes CAP et CR coïncident l'un avec l'autre.

Selon un autre exemple, l'utilisateur doit saisir manuellement (ou copier-coller) lui-même le code d'appairage CAP (affiché à l'écran) dans le champ cible approprié.

La comparaison du code d'appairage CAP et du code de référence CR peut, comme déjà indiqué, être automatisée de sorte que le module de traitement M26 n'active l'appairage des modules de communication sans fil M2, M20 que si le bon code d'appairage est entré dans le champ cible en question (autrement dit, que si le code d'appairage CAP correspond au code de référence CR, ce dernier pouvant ou non être affiché à l'écran 24A selon le cas).

Comme déjà indiqué, l'appairage (S44) une fois réalisé permet aux modules de communication sans fil M2 et M20 de communiquer ensemble via la liaison L2.

Par ailleurs, dans l'exemple considéré ici, le périphérique DP1 est un dispositif périphérique de paiement par carte permettant, une fois couplé au terminal T1, de former un terminal de paiement par carte. La carte de paiement C est par exemple insérée dans le lecteur 10 afin que ces deux éléments coopèrent ensemble par contact. Le périphérique DP1 et le terminal T1 coopèrent ensemble via la liaison de communication sans fil L2 afin de réaliser une fonction donnée comme, par exemple, une transaction de paiement par contact requérant la saisie du code PIN de la carte par l'utilisateur. Pour ce faire, l'utilisateur saisit le code PIN à l'aide de l'interface utilisateur 24 du terminal T1.

L'invention permet avantageusement d'appairer de façon sécurisée les moyens de communication sans fil d'un terminal de communication, d'une part, et d'un dispositif périphérique, d'autre part. Cet appairage est réalisé sans que l'usage d'une quelconque interface utilisateur ne soit nécessaire, voire même présente, au niveau du dispositif périphérique.

Dans un cas particulier, l'utilisation de l'interface utilisateur de façon déportée au niveau du terminal de communication permet notamment d'assurer une bonne compacité et une complexité limitée du dispositif périphérique, tout en garantissant un appairage sécurisé des moyens de communication sans fil en question.

Alternativement, l'appairage peut être réalisé sans même faire appel à une interface utilisateur du côté du terminal de communication. Lorsque notamment le système d'exploitation du terminal de communication le permet, aucune interface utilisateur n'est utilisée, voire même présente, au niveau dudit terminal : tout le processus d'appairage est géré automatiquement. Il est ainsi possible de limiter au maximum l'usage d'une interface utilisateur et de faciliter le processus d'appairage pour l'utilisateur.

L'invention permet en particulier de réaliser un tel appairage, de type Bluetooth par exemple, en conformité avec la norme PCI PTS, entre un terminal de communication (par exemple de type Smartphone, tablette ou équivalent) et un dispositif périphérique tel qu'un lecteur de carte par exemple (dans un système mPOS par exemple). Il est ainsi possible de sécuriser l'association d'un terminal de communication avec un lecteur de carte formant ensemble un terminal de paiement par carte requérant la saisie du code PIN.

Un homme du métier comprendra que les modes de réalisation et variantes décrits ci-avant ne constituent que des exemples non limitatifs de mise en œuvre. En particulier, l'homme du métier pourra envisager une quelconque combinaison des variantes et modes de réalisation décrits ci-avant afin de répondre à un besoin bien particulier.

## Revendications

1. Dispositif périphérique (DP1) destiné à être couplé de manière amovible à un terminal de communication (T1), le dispositif périphérique comprenant :
- au moins un connecteur (6A) coopérant, lorsque ledit dispositif périphérique est couplé audit terminal de communication, avec au moins un connecteur (6B) complémentaire sur le terminal de communication de sorte à former une liaison de communication filaire (L1) entre ledit dispositif périphérique et le terminal de communication ;
- un premier module de communication sans fil (M2) apte à communiquer avec un deuxième module de communication sans fil (M20) sur le terminal de communication lorsque lesdits modules de communication sans fil sont appairés l'un avec l'autre ;
- un module de réception (M4) pour recevoir, via la liaison de communication filaire (L1), une première commande causant le démarrage du dispositif périphérique et une deuxième commande d'appairage comprenant un identifiant (ID) du terminal de communication, ladite commande d'appairage déclenchant un processus d'appairage entre ledit premier module de communication sans fil (M20) et ledit deuxième module de communication sans fil (M2) ;
- un module de génération (M6) pour générer, en réponse audit identifiant reçu, un code d'appairage (CAP) ; et
- un module de transmission (M8) pour transmettre au terminal de communication, via la liaison de communication filaire, le code d'appairage de sorte à configurer un appairage entre lesdits premier et deuxième modules de communication sans fil (M2, M20), ledit appairage étant mis en œuvre lorsque le code d'appairage transmis (CAP) coïncide avec un code de référence (CR) déterminé par le terminal de communication (Tl), et permettant que lesdits modules de communication sans fil (M2, M20) puissent communiquer ensemble.

2. Dispositif selon la revendication 1 **caractérisé en ce que** l'appairage entre lesdits premier et deuxième modules de communication sans fil (M2, M20) est de type Bluetooth, Wifi ou Wibree.

3. Dispositif selon la revendication 2, caractérisé en ce le dispositif périphérique (DP1) est configuré pour agir en tant que dispositif maître dans ledit appairage.

4. Dispositif selon l'une quelconque des revendications 1 à 3, **caractérisé en ce que** l'identifiant (ID) comprend l'adresse réseau du terminal de communication (T1).

5. Dispositif selon l'une quelconque des revendications 1 à 4, **caractérisé en ce que** le module de génération (M6) est configuré pour générer aléatoirement ledit code d'appairage (CAP).

6. Dispositif selon l'une quelconque des revendications 1 à 5, **caractérisé en ce que** le dispositif périphérique est un dispositif périphérique de paiement comprenant un lecteur de carte (10) destiné à coopérer avec une carte (C) pour mettre en œuvre une transaction de paiement.

7. Terminal de communication (T1) destiné à être couplé de manière amovible à un dispositif périphérique (DP1), comprenant :
- au moins un connecteur (6B) apte à coopérer, lorsque ledit terminal de communication est couplé au dispositif périphérique, avec au moins un connecteur (6A) complémentaire sur le dispositif périphérique de sorte à former une liaison de communication filaire (L1) entre ledit dispositif périphérique et le terminal de communication ;
- un premier module de communication sans fil (M20) apte à communiquer avec un deuxième module de communication sans fil (M2) sur le dispositif périphérique (DP1) lorsque lesdits modules de communication sans fil sont appairés l'un avec l'autre ;
- un module de transmission (M22) pour transmettre au dispositif périphérique, via la liaison de communication filaire (L1), première commande destinée à déclencher le démarrage du dispositif périphérique et une deuxième commande d'appairage comprenant un identifiant (ID) du terminal de communication, ladite commande d'appairage déclenchant un processus d'appairage entre ledit premier module de communication sans fil (M20) et ledit deuxième module de communication sans fil (M2) ;
- un module vérification de l'activation du premier module de communication sans fil,
- un module de réception (M24) pour recevoir, en réponse audit identifiant envoyé, via la liaison de communication filaire (L1), un code d'appairage (CAP) du dispositif périphérique ; et
- un module de traitement (M26) pour configurer ledit appairage entre les premier et deuxième modules de communication sans fil (M20, à partir du code d'appairage reçu, le module de traitement étant configuré pour activer ledit appairage lorsque le code d'appairage reçu (CAP) coïncide avec un code de référence (CR) déterminé par le terminal de communication (T1).

8. Terminal de communication selon la revendication 7, **caractérisé en ce que** le module de traitement (M26) est configuré pour configurer automatiquement ledit appairage à partir du code d'appairage sans intervention humaine via une quelconque interface utilisateur au niveau dudit terminal de communication.

9. Terminal de communication selon la revendication 7, **caractérisé en ce qu'**il comprend une interface utilisateur (24), le module de traitement (M26) étant configuré pour causer la présentation, par l'interface utilisateur, du code d'appairage (CAP) à un utilisateur afin de permettre la configuration dudit appairage.

10. Système comprenant :
- un dispositif périphérique (DP1) selon l'une quelconque des revendications 1 à 7 ; et
- un terminal de communication (T1) selon l'une quelconque des revendications 8 à 11.

11. Procédé d'appairage mis en œuvre par un dispositif périphérique (DP1) destiné à être couplé de manière amovible à un terminal de communication (T1), ledit procédé comprenant les étapes suivantes :
- accouplement (S2 ; S20) d'au moins un connecteur (6A) du dispositif périphérique avec au moins un connecteur (6B) complémentaire sur le terminal de communication, de sorte à former une liaison de communication filaire (L1) entre ledit dispositif périphérique et le terminal de communication ;
- réception (S20), via la liaison de communication filaire (L1), d'une première commande causant le démarrage du dispositif périphérique,
- réception (S30), via la liaison de communication filaire (L1), d'une deuxième commande d'appairage comprenant un identifiant (ID) du terminal de communication (T1), ladite commande d'appairage déclenchant un processus d'appairage entre un premier module de communication sans fil (M20) du terminal de communication (T1) et un deuxième module de communication sans fil (M2) du dispositif périphérique (DP1) ;
- génération (S6 ; S32), en réponse à la réception dudit identifiant, d'un code d'appairage (CAP) ; et
- transmission (S8 ; S34) au terminal de communication, via la liaison de communication filaire (L1), du code d'appairage (CAP) de sorte à configurer un appairage entre le premier module de communication sans fil (M2) du dispositif périphérique (DP1) et le deuxième module de communication sans fil (M20) du terminal de communication (T1), ledit appairage étant mis en œuvre lorsque le code d'appairage transmis (CAP) coïncide avec un code de référence (CR) déterminé par le terminal de communication (T1), et permettant que lesdits modules de communication sans fil (M2, M20) puissent communiquer ensemble.

12. Procédé d'appairage mis en œuvre dans un terminal de communication (T1) destiné à être couplé de manière amovible à un dispositif périphérique (DP1), comprenant les étapes suivantes :
- accouplement (S2 ; S20) d'au moins un connecteur (6B) du terminal de communication avec au moins un connecteur (6B) complémentaire sur le dispositif périphérique, de sorte à former une liaison de communication filaire (L1) entre le terminal de communication et le dispositif périphérique ;
- transmission (S22), via la liaison de communication filaire (L1), d'une première commande destinée à déclencher le démarrage du dispositif périphérique,
- vérification (S26) de l'activation d'un premier module de communication sans fil (M20) du terminal de communication (T1),
- transmission (S4 ; S28) au dispositif périphérique, via la liaison de communication filaire (L1), d'une deuxième commande d'appairage comprenant un identifiant (ID) du terminal de communication, ladite deuxième commande d'appairage, demandant au dispositif périphérique de lancer un processus d'appairage entre le premier module de communication sans fil (M20) du terminal de communication (T1) et un deuxième module de communication sans fil (M2) du dispositif périphérique (DP1) ;
- réception (S36), en réponse audit identifiant envoyé, via la liaison de communication filaire (L1), d'un code d'appairage (CAP) du dispositif périphérique (DP1) ; et
- configuration (S38), à partir du code d'appairage (CAP) reçu, d'un appairage entre le premier module de communication sans fil (M20) du terminal de communication et le deuxième module de communication sans fil (M2) sur le dispositif périphérique (DP1) de sorte que lesdits modules de communication sans fil puissent communiquer ensemble, ledit appairage étant activé lorsque le code d'appairage reçu (CAP) coïncide avec un code de référence (CR) déterminé par le terminal de communication.

13. Programme d'ordinateur (PG1 ; PG2) comportant des instructions pour l'exécution des étapes du procédé d'appairage selon l'une des revendications 11 et 12, lorsque ledit programme est exécuté par un ordinateur.

## Patentansprüche

1. Peripheriegerät (DP1), das dazu bestimmt ist, mit einem Kommunikationsendgerät (T1) abnehmbar gekoppelt zu werden, wobei das Peripheriegerät umfasst:
- mindestens einen Verbinder (6A), der bei mit dem Kommunikationsendgerät gekoppeltem Peripheriegerät mit mindestens einem komplementären Verbinder (6B) an dem Kommunikationsendgerät zusammenwirkt, so dass eine drahtgebundene Kommunikationsverbindung (L1) zwischen dem Peripheriegerät und dem Kommunikationsendgerät gebildet wird;
- ein erstes drahtloses Kommunikationsmodul (M2), das geeignet ist, mit einem zweiten drahtlosen Kommunikationsmodul (M20) an dem Kommunikationsendgerät zu kommunizieren, wenn die drahtlosen Kommunikationsmodule miteinander gepairt sind;
- ein Empfangsmodul (M4), um über die drahtgebundene Kommunikationsverbindung (L1) einen ersten Befehl zu empfangen, der den Start des Peripheriegeräts veranlasst, und einen zweiten Pairing-Befehl mit einer Kennung (ID) des Kommunikationsendgeräts, wobei der Pairing-Befehl einen Pairing-Prozess zwischen dem ersten drahtlosen Kommunikationsmodul (M20) und dem zweiten drahtlosen Kommunikationsmodul (M2) auslöst;
- ein Erzeugungsmodul (M6), um als Antwort auf die empfangene Kennung einen Pairing-Code (CAP) zu erzeugen; und
- ein Übertragungsmodul (M8), um den Pairing-Code an das Kommunikationsendgerät über die drahtgebundene Kommunikationsverbindung zu übertragen, so dass ein Pairing zwischen dem ersten und dem zweiten drahtlosen Kommunikationsmodul (M2, M20) konfiguriert wird, wobei das Pairing ausgeführt wird, wenn der übertragene Pairing-Code (CAP) mit einem von dem Kommunikationsendgerät (T1) festgelegten Referenzcode (CR) übereinstimmt, und es ermöglicht, dass die drahtlosen Kommunikationsmodule (M2, M20) miteinander kommunizieren können.

2. Gerät nach Anspruch 1, **dadurch gekennzeichnet, dass** das Pairing zwischen dem ersten und dem zweiten drahtlosen Kommunikationsmodul (M2, M20) vom Typ Bluetooth, Wifi oder Wibree ist.

3. Gerät nach Anspruch 2, **dadurch gekennzeichnet, dass** das Peripheriegerät (DP1) konfiguriert ist, um im Pairing als Master-Gerät zu wirken.

4. Gerät nach einem beliebigen der Ansprüche 1 bis 3, **dadurch gekennzeichnet, dass** die Kennung (ID) die Netzadresse des Kommunikationsendgeräts (T1) umfasst.

5. Gerät nach einem beliebigen der Ansprüche 1 bis 4, **dadurch gekennzeichnet, dass** das Erzeugungsmodul (M6) konfiguriert ist, um den Pairing-Code (CAP) zufällig zu erzeugen.

6. Gerät nach einem beliebigen der Ansprüche 1 bis 5, **dadurch gekennzeichnet, dass** das Peripheriegerät ein Zahlungsperipheriegerät mit einem Kartenleser (10) ist, der dazu bestimmt ist, mit einer Karte (C) zusammenzuwirken, um eine Zahlungstransaktion auszuführen.

7. Kommunikationsendgerät (T1), das dazu bestimmt ist, mit einem Peripheriegerät (DP1) abnehmbar gekoppelt zu werden, umfassend:
- mindestens einen Verbinder (6B), der bei mit dem Peripheriegerät gekoppeltem Kommunikationsendgerät mit mindestens einem komplementären Verbinder (6A) an dem Peripheriegerät zusammenwirkt, so dass eine drahtgebundene Kommunikationsverbindung (L1) zwischen dem Peripheriegerät und dem Kommunikationsendgerät gebildet wird;
- ein erstes drahtloses Kommunikationsmodul (M20), das geeignet ist, mit einem zweiten drahtlosen Kommunikationsmodul (M2) an dem Peripheriegerät (DP1) zu kommunizieren, wenn die drahtlosen Kommunikationsmodule miteinander gepairt sind;
- ein Übertragungsmodul (M22), um über die drahtgebundene Kommunikationsverbindung (L1) an das Peripheriegerät einen ersten Befehl zum Auslösen des Starts des Peripheriegeräts und einen zweiten Pairing-Befehl mit einer Kennung (ID) des Kommunikationsendgeräts zu übertragen, wobei der Pairing-Befehl einen Pairing-Prozess zwischen dem ersten drahtlosen Kommunikationsmodul (M20) und dem zweiten drahtlosen Kommunikationsmodul (M2) auslöst;
- ein Modul zum Prüfen der Aktivierung des ersten drahtlosen Kommunikationsmoduls;
- ein Empfangsmodul (M24), um als Antwort auf die gesendete Kennung über die drahtgebundene Kommunikationsverbindung (L1) einen Pairing-Code (CAP) des Peripheriegeräts zu empfangen und
- ein Verarbeitungsmodul (M26), um anhand des empfangenen Pairing-Codes das Pairing zwischen dem ersten und dem zweiten drahtlosen Kommunikationsmodul (M20) zu konfigurieren, wobei das Verarbeitungsmodul konfiguriert ist, um das Pairing zu aktivieren, wenn der empfangene Pairing-Code (CAP) mit einem von dem Kommunikationsendgerät (T1) festgelegten Referenzcode (CR) übereinstimmt.

8. Kommunikationsendgerät nach Anspruch 7, **dadurch gekennzeichnet, dass** das Verarbeitungsmodul (M26) konfiguriert ist, um das Pairing anhand des Pairing-Codes ohne menschlichen Eingriff über eine beliebige Benutzerschnittstelle an dem Kommunikationsendgerät automatisch zu konfigurieren.

9. Kommunikationsendgerät nach Anspruch 7, **dadurch gekennzeichnet, dass** es eine Benutzerschnittstelle (24) umfasst, wobei das Verarbeitungsmodul (M26) konfiguriert ist, um die Benutzerschnittstelle zu veranlassen, einem Benutzer den Pairing-Code (CAP) zu präsentieren, um das Konfigurieren des Pairings zu ermöglichen.

10. System, umfassend:
- ein Peripheriegerät (DP1) nach einem beliebigen der Ansprüche 1 bis 7; und
- ein Kommunikationsendgerät (T1) nach einem beliebigen der Ansprüche 8 bis 11.

11. Pairing-Verfahren, das durch ein Peripheriegerät (DP1) implementiert wird, welches dazu bestimmt ist, mit einem Kommunikationsendgerät (T1) abnehmbar gekoppelt zu werden, wobei das Verfahren die folgenden Schritte umfasst:
- Kopplung (S2; S20) von mindestens einem Verbinder (6A) des Peripheriegeräts mit mindestens einem komplementären Verbinder (6B) an dem Kommunikationsendgerät, so dass eine drahtgebundene Kommunikationsverbindung (L1) zwischen dem Peripheriegerät und dem Kommunikationsendgerät gebildet wird;
- Empfang (S20) eines ersten Befehls über die drahtgebundene Kommunikationsverbindung (L1), welcher den Start des Peripheriegeräts veranlasst;
- Empfang (S30) eines zweiten Pairing-Befehls mit einer Kennung (ID) des Kommunikationsendgeräts (T1) über die drahtgebundene Kommunikationsverbindung (L1), wobei der Pairing-Befehl einen Pairing-Prozess zwischen einem ersten drahtlosen Kommunikationsmodul (M20) des Kommunikationsendgeräts (T1) und einem zweiten drahtlosen Kommunikationsmodul (M2) des Peripheriegeräts (DP1) auslöst;
- Erzeugung (S6; S32) eines Pairing-Codes (CAP) als Antwort auf den Empfang der Kennung; und
- Übertragung (S8; S34) des Pairing-Codes (CAP) an das Kommunikationsendgerät über die drahtgebundene Kommunikationsverbindung (L1), um ein Pairing zwischen dem ersten drahtlosen Kommunikationsmodul (M2) des Peripheriegeräts (DP1) und dem zweiten drahtlosen Kommunikationsmodul (M20) des Kommunikationsendgeräts (T1) zu konfigurieren, wobei das Pairing ausgeführt wird, wenn der übertragene Pairing-Code (CAP) mit einem von dem Kommunikationsendgerät (T1) festgelegten Referenzcode (CR) übereinstimmt, und es ermöglicht, dass die drahtlosen Kommunikationsmodule (M2, M20) miteinander kommunizieren können.

12. Pairing-Verfahren, das in einem Kommunikationsendgerät (T1) implementiert wird, welches dazu bestimmt ist, mit einem Peripheriegerät (DP1) abnehmbar gekoppelt zu werden, umfassend die folgenden Schritte:
- Kopplung (S2; S20) von mindestens einem Verbinder (6B) des Kommunikationsendgeräts mit mindestens einem komplementären Verbinder (6B) an dem Peripheriegerät, so dass eine drahtgebundene Kommunikationsverbindung (L1) zwischen dem Kommunikationsendgerät und dem Peripheriegerät gebildet wird;
- Übertragung (S22) eines ersten Befehls über die drahtgebundene Kommunikationsverbindung (L1), welcher dazu bestimmt ist, den Start des Peripheriegeräts auszulösen;
- Prüfung (S26) der Aktivierung eines ersten drahtlosen Kommunikationsmoduls (M20) des Kommunikationsendgeräts (T1);
- Übertragung (S4; S28) eines zweiten Pairing-Befehls mit einer Kennung (ID) des Kommunikationsendgeräts an das Peripheriegerät über die drahtgebundene Kommunikationsverbindung (L1), wobei der zweite Pairing-Befehl das Peripheriegerät zum Start eines Pairing-Prozesses zwischen dem ersten drahtlosen Kommunikationsmodul (M20) des Kommunikationsendgeräts (T1) und einem zweiten drahtlosen Kommunikationsmodul (M2) des Peripheriegeräts (DP1) auffordert;
- Empfang (S36) eines Pairing-Codes (CAP) des Peripheriegeräts (DP1) als Antwort auf die gesendete Kennung über die drahtgebundene Kommunikationsverbindung (L1); und
- Konfiguration (S38) eines Pairings zwischen dem ersten drahtlosen Kommunikationsmodul (M20) des Kommunikationsendgeräts und dem zweiten drahtlosen Kommunikationsmodul (M2) an dem Peripheriegerät (DP1) anhand des empfangenen Pairing-Codes (CAP), so dass die drahtlosen Kommunikationsmodule miteinander kommunizieren können, wobei das Pairing aktiviert wird, wenn der empfangene Pairing-Code (CAP) mit einem von dem Kommunikationsendgerät festgelegten Referenzcode (CR) übereinstimmt.

13. Computerprogramm (PG1; PG2) mit Befehlen für die Ausführung der Schritte des Pairing-Verfahrens nach einem der Ansprüche 11 und 12, wenn das Programm durch einen Computer ausgeführt wird.

## Claims

1. Peripheral device (DP1) to be detachably coupled with a communications terminal (T1), the peripheral device comprising:
- at least one connector (6A) cooperating, when said peripheral device is coupled with said communications terminal, with at least one complementary connector (6B) on the communications terminal so as to form a wired communications link (L1) between said peripheral device and the communications terminal;
- a first wireless communications module (M2) capable of communicating with a second wireless communications module (M20) on the communications terminal when said wireless communications modules are paired with each other;
- a reception module (M4) to receive, though the wired communications link (L1),a first command triggering the starting of the peripheral device and a second pairing command comprising an identifier (ID) of the communications terminal, said pairing command triggering a pairing process between the first wireless communications module (M2) and the wireless communications module (M20);
- a generating module (M6) to generate, in response to the reception of said identifier, a pairing code (CAP); and
- a transmission module (M8) to transmit to the communications terminal, via the wired communications link, said pairing code so as to configure a pairing between said first and second wireless communications modules (M2, M20),
said pairing being executed when said transmitted pairing code lines up with a reference code (CR) generated by the communications terminal and enabling said communications modules (2, 20) to communicate with each other.

2. Device according to claim 1, **characterized in that** the pairing between said first and second wireless communications modules (M2, M20) is of the Bluetooth or Wi-Fi type.

3. Device according to claim 2, **characterized in that** the peripheral device (DP1) is configured to act as a master device in said pairing.

4. Device according to any one of the claims 1 to 3, **characterized in that** the identifier comprises the network address of the communications terminal (T1).

5. Device according to any one of the claims 1 to 4, **characterized in that** the generating module (M6) is configured to randomly generate the pairing code (CAP).

6. Device according to any one of the claims 1 to 5, **characterized in that** the peripheral device is a peripheral payment device comprising a card reader (10) that is to cooperate with a card (C) to implement a payment transaction.

7. Communications terminal (T1) to be detachably coupled with a peripheral device (DP1) comprising:
- at least one connector (6B) capable of cooperating, when said communications terminal is coupled with the peripheral device, with at least one complementary connector(6A) on the peripheral device so as to form a wired communications link (L1) between said peripheral device and the communications terminal;
- a first wireless communications module (M20) capable of communicating with a second wireless communications module (M2) on the peripheral device (DP1) when said wireless communications modules are paired with each other;
- a transmission module (M22) to transmit to peripheral device (DP1), though the wired communications link (L1),a first command triggering the starting of the peripheral device and a second pairing command comprising an identifier (ID) of the communications terminal, said pairing command triggering a pairing process between the first wireless communications module (M2) and the wireless communications module (M20);
- a checking module for checking the actual starting of the first wireless communications module (M20),
- a reception module (M24) to receive, in response to said sent identifier via the wired communications link (L1), a pairing code (CAP) from the peripheral device,; and
- a processing module (M26) to configure said pairing between the first and second wireless communications modules (M20, M2) from the received pairing code (CAP), the processing module (M26) being configured to trigger the pairing when said transmitted pairing code lines up with a reference code (CR) generated by the communications terminal.

8. Communications terminal according to claim 7, **characterized in that** the processing module (M26) is configured to automatically configure said pairing in using the pairing code without human intervention via any particular user interface in said communications terminal.

9. Communications terminal according to claim 7, **characterized in that** it comprises a user interface (24), the processing module (M26) being configured to cause the presentation, by the user interface, of the pairing code (CAP) to a user in order to enable the configuration of said pairing.

10. System comprising :
- a peripheral device (DP1) according to any one of the claims 1 to 6 ; et
- a communications terminal (T1) according to any one of the claims 7 to 9.

11. Method for pairing implemented by a peripheral device (DP1) to be detachably coupled with a communications terminal (T1), said method comprising the following steps:
- coupling (S2; S20) at least one connector (6A) of the peripheral device with at least one complementary connector (6B) to the communications terminal so as to form a wired communications link (L1) between said peripheral device and the communications terminal;
- receiving (S20), through the wired communications link (L1), a first command triggering the start of the peripheral device,
- receiving (S30), through the wired communications link (L1), a second pairing command comprising an identifier (ID) of the communications terminal, said pairing command triggering a pairing process between a first wireless communications module (M2)of te communications terminal and a second wireless communications module (M20)of the peripheral device;
- generating (S6; S32) the pairing code (CAP) in response to the reception of said identifier; and
- transmitting (S8 ; S34) to the communications terminal, through the wired communications link (L1), the pairing code (CAP) so as to configure a pairing between the first wireless communications module (M2) of the peripheral device (DP1) and the second wireless communications module (M20) of the communications terminal (T1), said pairing being executed when said transmitted pairing code lines up with a reference code (CR) generated by the communications terminal and enabling said communications modules (2, 20) to communicate with each other.

12. Method for pairing implemented in a communications terminal (T1) that is to be detachably coupled with a peripheral device (DP1) comprising the following steps:
- coupling (S2 ; S20) at least one connector (6B) of the communications terminal with at least one complementary connector (6B) to the peripheral device so as to form a wired communications link (L1) between the communications terminal and the peripheral device;
- transmitting (S22), through the wired communications link (L1), a first command triggering the start of the peripheral device,
- checking (S26) the actual starting of a first wireless communications module (M20) of the communications terminal,
- transmitting to the peripheral device, through the wired communications link (L1), a second pairing command comprising an identifier (ID) of the communications terminal, said pairing command triggering a pairing process between the first wireless communications module (M2)of te communications terminal and a second wireless communications module (M20)of the peripheral device (;
- receiving (S36) a pairing code (CAP) from the peripheral device (DP1) in response to said sent identifier, via the wired communications link(L1); and
- configuring (S38), from the pairing code, a pairing between the first wireless communications module (M20) of the communications terminal and the second wireless communications module (M2) on the peripheral device (DP1) so that said wireless communications modules can communicate together, said pairing being executed when said transmitted pairing code lines up with a reference code (CR) generated by the communications terminal.

13. Computer program (PG1 ; PG2) comprising instructions for the execution of the steps of the pairing method according to any one of the claims 11and 12, when said program is executed by a computer.
